# EUROPEAN PATENT SPECIFICATION

(11) **EP 3 534 760 B1**
(45) Date of publication and mention of the grant of the patent: **11.11.2020**
(21) Application number: 17901340.4
(22) Date of filing: 22.09.2017
(51) Int. Cl.: A47J 31/44, A47J 31/52

(54) **A COFFEE MACHINE AND TURKISH COFFEE BREWING METHOD**
KAFFEEMASCHINE UND VERFAHREN ZUM BRAUEN VON TÜRKISCHEM KAFFEE
MACHINE À CAFÉ ET PROCÉDÉ DE PRÉPARATION DE CAFÉ TURC

(30) Priority: 07.11.2016 TR 201615850
(43) Date of publication of application: 11.09.2019
(73) Proprietor: Arçelik Anonim Sirketi, 34445 Istanbul (TR)
(72) Inventor: MET, Aylin, 34950 Tuzla/Istanbul (TR); HASANREISOGLU, Ali Levent, 34950 Tuzla/Istanbul (TR); CENGIZ, Osman, 34950 Tuzla/Istanbul (TR); EFELEROGLU, Mehmet, 34950 Tuzla/Istanbul (TR); AKGÜL, Özkan, 34950 Tuzla/Istanbul (TR)
(86) International application number: PCT/TR2017/050443
(87) International publication number: WO 2018/174837

(56) References cited:
- WO-A1-2011/007266
- WO-A2-2008/068224
- WO-A2-2008/068225
- CN-U- 203 619 344
- DE-U1-202014 008 862

## Description

The present invention relates to a coffee machine wherein the brewing pot is placed into a brewing chamber in the body.

Coffee machines that can brew Turkish coffee are known. In this type of machines, water and coffee are transferred to a brewing pot automatically or by the user and the coffee is brewed by heating the brewing pot. In the traditional Turkish coffee brewing method, the coffee is boiled with water, thus the coffee essence comes out. During the boiling, the coffee foams and the coffee pot is removed from the cooker and served before the foam overflows from the coffee pot. In the coffee machines, while brewing Turkish coffee it is very important to detect if the coffee is ready for serving. Use of infrared level sensors is known to this end, and the sensor measures the foam level to decide if the brewing is completed or not. However, the amount of foam on the coffee is affected by the amount of coffee, the miscibility of the coffee, the type of coffee (such as mastic flavored, etc.) and additional ingredients such as sugar, etc., and it becomes difficult for the coffee machines to brew the coffee in the same consistency every time. Moreover, the error margin of the sensors may cause to decide at the wrong time that the brewing is completed. In the infrared sensors used for measuring level, the error margin in the measurement increases in proportion to the square of the distance to the sensor, thus the range wherein a reliable measurement can be carried out is reduced. That the error margin is not equal, in other words linear, but variable in all measurements, adversely affects the decision about the brewing of the coffee made by the control unit. Moreover, in measurements close to the sensor, the error margin increases due to the beams reflected from the side walls of the brewing pot. In the state of the art, embodiments are present, wherein the brewing decision is made based on the assumption that the error margin of the sensor is the same in all the measurement levels. In this type of coffee machines, when the sensor makes a measurement smaller than the height level expected at the beginning of the brewing process, in other words than the actual height level, the coffee remains uncooked, and if a measurement greater than the expected level is made, the coffee is overcooked and has a bitter taste.

In the state of the art International Patent Application No. WO2008068224, a coffee machine that determines the brewing parameters according to the number of cups is disclosed.

The aim of the present invention is the realization of a coffee machine that provides the brewing of Turkish coffee with the traditional consistency.

The coffee machine realized in order to attain the aim of the present invention, explicated in the claims, comprises a control unit that enables a measurement to be made at the beginning of the brewing process by means of the level sensor used for controlling the completion of the brewing process and that compares the measured value with a reference value determined by the producer so as to calculate the brewing height around the reference brewing height such that a difference smaller than the difference between the measured value and the reference value is obtained.

In an embodiment of the present invention, if the value measured a certain time after the brewing process starts is smaller than a reference value determined by the producer, the control unit calculates the brewing height as smaller than the reference brewing height such that a difference smaller than the difference between the measured value and the reference value is obtained between the brewing height and the reference brewing height. In another version of this embodiment, if the measured value is higher than the reference value, the control unit calculates the brewing height as higher than the reference brewing height such and the difference therebetween is smaller than the above-mentioned first difference. By means of this embodiment, the coffee is prevented from being undercooked so as to be raw if the measured value is smaller than the reference value, and prevented from being overcooked so as to have a bitter taste if the measured value is higher than the reference value. In another version of this embodiment, if the measured value is equal to the reference value, the brewing height is accepted as the reference brewing height and the control unit ends the brewing process at the reference brewing height.

In another embodiment of the present invention, the control unit provides that the difference between the brewing height and the reference brewing height is higher, if the measured value is smaller than the reference value, than the case where the measured value is higher than the reference value - when the absolute difference between the measured value and the reference value is equal. In other words, even if the difference between the measured value and the reference value is the same, the difference between the brewing height and the reference brewing height is different based on whether the measured value is smaller or higher than the reference value. In this embodiment, the fact that the sensor has different error margins under and above the reference value is taken into consideration, since the sensor makes measurements with a lower error margin under the reference value, the difference between the brewing height and the reference brewing height is kept wider if the measured value is smaller than the reference value.

In another embodiment of the present invention, the control unit calculates the brewing height by making a different calculation for different types of coffee and additional ingredients. In this embodiment, different types of coffee are brewed differently, thus the taste of the coffee is improved. For example, when sugar is added into the coffee more foam is formed than the sugar-free coffee, and in this case, the control unit calculates the brewing height with a different calculation method. In this embodiment, the user enters the information on the coffee type or additional ingredients added via the panel on the coffee machine.

The coffee machine of the present invention is controlled by a control method that is executed by the control unit for brewing the coffee in the desired consistency and that comprises the steps of:
- measuring the level of the coffee-water mixture in the brewing pot a predetermined time after the brewing process starts and saving the measured value into the memory of the control unit,
- comparing the measured value with a predetermined reference value,
- selecting the first coefficient for calculating the brewing height if the measured value is smaller than the reference height value and selecting the second coefficient for calculating the brewing height if the measured value is higher than the reference height value,
- calculating the brewing height around a predetermined reference brewing height by, if the measured value is smaller than the reference value, multiplying the absolute difference therebetween by the first coefficient and subtracting the result from the reference brewing value,
- calculating the brewing height around a predetermined reference brewing height by, if the measured value is higher than the reference value, multiplying the absolute difference therebetween by the second coefficient and adding the result to the reference brewing value,
- ending the brewing process when the value measured by the level sensor during the brewing process is equal to the calculated brewing height.

In the coffee machine of the present invention, the brewing height is calculated by taking the error margin of the sensor into consideration. Moreover, the brewing height is enabled to be within a narrow range around a reference brewing height.

The coffee machine realized to attain the aim of the present invention is illustrated in the attached figures, where:

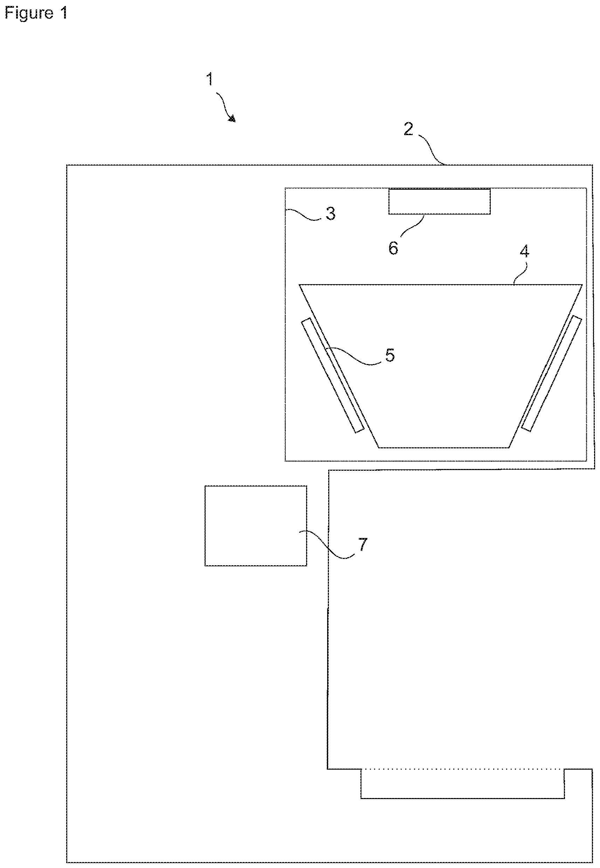

Figure 1 - is the perspective view of a coffee machine.

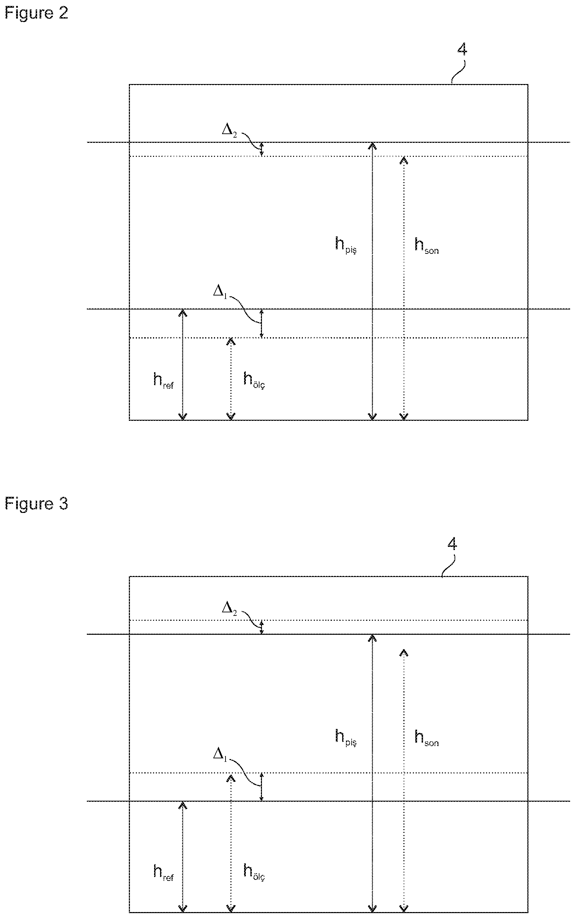

Figure 2 - is the view of the brewing pot in an embodiment of the present invention.
Figure 3 - is the view of the brewing pot in another embodiment of the present invention.

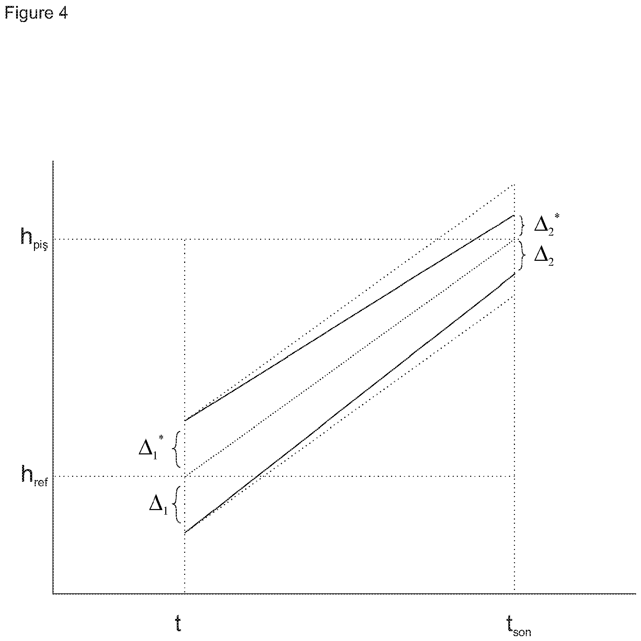

Figure 4 - is the graphic of the coffee height according to the time in another embodiment of the present invention.

The elements illustrated in the figures are numbered as follows:
1. Coffee machine
2. Body
3. Brewing chamber
4. Brewing pot
5. Heater
6. Level sensor
7. Control unit
t - predetermined time
tson - brewing completion time
href - predetermined reference height value at t
hölç - height value measured by the level sensor at t
hpi 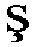 - predetermined reference brewing height
hson - calculated brewing height
Δ1 - difference between href and hölç
Δ2 - difference between hpi 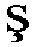 and hson
K1 - first predetermined coefficient
K2 - second predetermined coefficient

The coffee machine (1) comprises a body (2); at least one brewing chamber (3) that is disposed in the body (2); at least one brewing pot (4) that is placed into the brewing chamber (3) and wherein water, coffee and as per the preference additional ingredients such as sugar are put and brewed; a heater (5) that is disposed under the brewing chamber (3) and that enables the brewing port (4) to be heated; a level sensor (6) that is disposed at the ceiling of the brewing chamber (3), that faces towards the brewing pot (4) and that measures the level (L) of the water-coffee mixture in the brewing pot (4), and a control unit (7) that controls the heater (5) according to the data received from the level sensor (6) and that calculates a brewing height (hson) whereat the brewing process is ended.

In the coffee machine (1), the user puts water and coffee into the brewing pot (4) and places the same into the brewing chamber (3) or water and coffee are automatically taken into the brewing pot (4), and then the user starts the brewing process by pressing the start button (not shown in the figures). In the brewing process, the heater (5) contacts the brewing pot (4) preferably from below and provides the brewing of Turkish coffee. The level sensor (6) will be referred to as the sensor (6) hereinafter. By means of the sensor (6), the raising of the foam on the coffee is detected and it is decided if the brewing process is completed. While brewing coffee, especially brewing Turkish coffee, the control of the amount of heat transferred to the brewing pot (4) is very important. The control unit (7) controls the heater (5) according to the data received from the sensor (6).

The coffee machine (1) of the present invention comprises the control unit (7) that calculates the brewing height (hson) such that a difference (Δ2) that is smaller than the difference (Δ1), which is different than zero, between the height measurement value (hölç) taken by means of the sensor (6) a certain time (t) after the start of the brewing process and a predetermined reference value (href) for the same t is obtained, the difference (Δ2) is between the brewing height (hson) and a predetermined reference brewing height (hpi 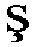 ). Here, the term height refers to the height value from the base of the brewing pot (4). Due to the chaotic nature of the coffee - water mixture and to the lack of precision of the sensor (6) at distances far from the sensor (6), in other words at low heights, the measurement value (hölç) obtained a certain time (t) after the start of the brewing process may be different from the reference value (href) for the same t. In this case, the control unit (7) calculates the brewing height (hson) different from the reference brewing height (hpi 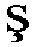 ) by using the difference (Δ1) therebetween. By providing that the difference (Δ2) between the calculated brewing height (hson) and the reference brewing height (hpi 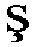 ) is smaller than the difference (Δ1) between the measured value (hölç) and the reference value (href), the brewing height (hson) is enabled to remain within a narrow range around the reference brewing height (hpi 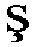 ) during every brewing process, thus improving the taste of the coffee. The reference value (href) is the mean value, obtained as a result of the experiments conducted by the producer, of the height reached by the required amount of coffee and water in the brewing pot (4) after the certain time (t). Similarly, the reference brewing height (hpi 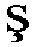 ) is the mean brewing height obtained as a result of the experiments conducted by the producer. In the present invention, it is taken into consideration that the error margin of the sensor (6) is lower at levels close to the completion of the brewing of the coffee than the start of the brewing process.

In an embodiment of the present invention, if the height measurement value (hölç) taken by means of the sensor (6) a certain time (t) after the start of the brewing process is smaller (hölç<href) than a predetermined reference value (href), the control unit (7) calculates the brewing height (hson) by multiplying the difference (Δ1) between the measured value (hölç) and the reference value (href) by a first coefficient (K1) that is smaller than 1 and then subtracting the result from the reference brewing height (hpi 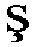 ) (hson=hpi 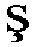 -Δ1*K1). In this embodiment, if the measured value (hölç) taken after the certain time (t) is smaller than the expected value or the value referred to as the reference value (href) by the producer, the control unit (7) calculates the brewing height (hson) by selecting the first coefficient (K1). The brewing height (hson) is calculated such that the difference (Δ2) between the brewing height (hson) and the reference brewing height (hpi 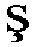 ) is smaller than the difference (Δ1) between the reference value (href) and the measured value (hölç). Thus, the coffee to be brewed is prevented from being undercooked so as to be raw.

In another embodiment of the present invention, if the height measurement value (hölç) taken by means of the sensor (6) a certain time (t) after the start of the brewing process is higher (hölç>href) than a predetermined reference value (href), the control unit (7) calculates the brewing height (hson) by multiplying the difference (Δ1) between the measured value (hölç) and the reference value (href) by a second coefficient (K2) that is smaller than 1 and then adding the result to the reference brewing height (hpi 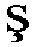 ) (hson=hpi 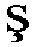 +Δ1*K2). In this embodiment, if the measured value (hölç) taken after the certain time (t) is higher than the expected value or the value referred to as the reference value (href) by the producer, the control unit (7) calculates the brewing height (hson) by selecting the second coefficient (K2). The brewing height (hson) is calculated such that the difference (Δ2) between the brewing height (hson) and the reference brewing height (hpi 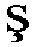 ) is smaller than the difference (Δ1) between the reference value (href) and the measured value (hölç). Thus, the coffee to be brewed is prevented from being overcooked so as to have a bitter taste. By calculating the brewing height (hson) in this manner, the error margin of the sensor (6) is corrected. The brewing height (hson) calculated by the described formula is used in the Turkish coffee brewing method of the present invention.

In another embodiment of the present invention, the control unit (7) ends the brewing process at the reference brewing height (hpi 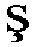 ) if the measured value (hölç) is equal to the reference value (href). In this embodiment, if the measured value (hölç) is equal to the reference value (href), the control unit (7) determines the brewing height (hson) as the reference brewing height (hpi 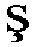 ) such the difference therebetween is zero.

In another embodiment of the present invention, the first coefficient (K1) is saved in the memory of the control unit (7) as being higher (K1>K2) than the second coefficient (K2). In this embodiment, it is taken into consideration that the sensor (6) makes measurement with a larger error margin as the distance to the sensor (6) increases. Therefore, the error margins of the sensor (6) under and above the reference value (href) are different. The first coefficient (K1) used when the measured value (hölç) is smaller than the reference value (href) is selected as higher than the second coefficient (K2) used when the measured value (hölç) is higher than the reference value (href), thus the error margin of the sensor (6) is taken into account. In these embodiments, it is aimed to minimize the error arising due to the fact that the sensor (6) makes measurements of distances away from the sensor (6) with a higher error margin than measurements of distances close thereto. Thus, it becomes possible to brew Turkish coffee with the traditional taste and consistency and the sensor (6) making measurements with a error margin affects the brewing process at minimum.

In another embodiment of the present invention, a different first coefficient (K1) and second coefficient (K2) are saved in the memory of the control unit (7) for different types of coffee such as with sugar, mastic flavored, decaf, aromatic, etc. The brewing height (hson) is different according to the type of coffee. The producer has determined that different coefficients for every type of coffee must be used to brew coffee with the traditional consistency and taste, and to this end, different coefficients for different types of coffee are saved in the memory of the control unit (7). In this embodiment, this difference is taken into account and the taste of the coffee is improved by using a different first coefficient (K1) and second coefficient (K2) are used for different types of coffee.

In another embodiment of the present invention, for each measured value (hölç) smaller than the reference value (href), the control unit (7) uses a different first coefficient (K1) directly proportional to the difference (Δ1) therebetween. In this embodiment, the parabolic error margin of the sensor (6) is taken into account while calculating the brewing height (hson). Thus, the brewing height (hson) is kept with a narrower range around the reference brewing height (hpi 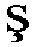 ). In this embodiment, the first coefficient (K1) is always smaller than 1.

In another embodiment of the present invention, for each measured value (hölç) higher than the reference value (href), the control unit (7) uses a different second coefficient (K2) directly proportional to the difference (Δ1) therebetween. In this embodiment, the parabolic error margin of the sensor (6) is taken into account while calculating the brewing height (hson). Thus, the brewing height (hson) is kept with a narrower range around the reference brewing height (hpi 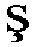 ). In these embodiments, the producer saves a different first coefficient (K1) and second coefficient (K2) in the memory of the control unit (7) for every different measured value (hölç) that can be measured by the sensor (6) as a result of the experiments. Thus, the affect of the measurement errors of the sensor (6) to the taste of the coffee is minimized. In this embodiment, the second coefficient (K2) is always smaller than 1.

The Turkish coffee brewing method of the present invention comprises the following steps executed by the control unit (7) in the coffee machine (1) comprising the above-described control unit (7):
- measuring the level of the coffee-water mixture in the brewing pot (4) a predetermined time (t) after the brewing process starts and saving the measured value (hölç) into the memory of the control unit (7),
- comparing the measured value (hölç) with a predetermined reference value (href),
- selecting the first coefficient (K1) for calculating the brewing height (hson) if the measured value (hölç) is smaller than the reference height value (href) (hölç < href) and selecting the second coefficient (K2) for calculating the brewing height (hson) if the measured value (hölç) is higher than the reference height value (href) (hölç > href),
- calculating the brewing height (hson) by using the reference brewing height (hpi 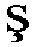 ), the reference height (href), the measured value (hölç) and the first coefficient (K1) or the second coefficient (K2),
- ending the brewing process when the value measured by the level sensor (6) during the brewing process is equal to the calculated brewing height (hson).

In the Turkish coffee machine (1) of the present invention, by measuring the height, in other words the level of the coffee-water mixture at the beginning of the brewing process, information on the error margin of the sensor (6) is obtained and the brewing height (hson) is calculated again for every brewing process. Thus, when the level sensor (6) makes a measurement smaller than the reference value (href), the brewing height (hson) is calculated such that the difference (Δ2) between the brewing height (hson) and the reference brewing height (hpi 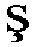 ) is smaller than the difference (Δ1) between the measured value (hölç) and the reference value (href), thereby preventing the coffee from being undercooked so as to be raw. Similarly, when the level sensor (6) makes a measurement higher than the reference value (href), the brewing height (hson) is calculated such that the difference (Δ2) between the brewing height (hson) and the reference brewing height (hpi 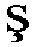 ) is smaller than the difference (Δ1) between the measured value (hölç) and the reference value (href), thereby preventing the coffee from being overcooked so as to burn. Moreover, by selecting the first coefficient (K1) higher than the second coefficient (k2), that the sensor (6) makes a measurement with a higher error margin when the sensor (6) makes a measurement smaller than the reference value (href) and the sensor (6) makes a measurement with a smaller error margin when the sensor (6) makes a measurement higher than the reference value (href) is taken into account while calculating the brewing height (hson).

## Claims

1. A coffee machine (1) **comprising** a body (2); at least one brewing chamber (3) that is disposed in the body (2); at least one brewing pot (4) that is placed into the brewing chamber (3) and wherein water, coffee and as per the preference additional ingredients such as sugar are put and brewed; a heater (5) that is disposed under the brewing chamber (3) and that enables the brewing port (4) to be heated; a level sensor (6) that is disposed at the ceiling of the brewing chamber (3), that faces towards the brewing pot (4) and that measures the level (L) of the water-coffee mixture in the brewing pot (4), and a control unit (7) that controls the heater (5) according to the data received from the level sensor (6) and that calculates a brewing height (hson) whereat the brewing process is ended, **characterized by** the control unit (7) that calculates the brewing height (hson) such that there will be a difference (Δ2) between the brewing height (hson) and a predetermined reference brewing height (hpi 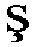 ), that is smaller than the difference (Δ1), which is different than zero, between the height measurement value (hölç) taken by means of the sensor (6) a certain time (t) after the start of the brewing process and a predetermined reference value (href) for the same time (t).

2. A coffee machine (2) as in Claim 1, **characterized by,** the control unit (7) that, if the height measurement value (hölç) taken by means of the sensor (6) a certain time (t) after the start of the brewing process is smaller (hölç<href) than a predetermined reference value (href), calculates the brewing height (hson) by multiplying the difference (Δ1) between the measured value (hölç) and the reference value (href) by a first coefficient (K1) that is smaller than 1 and then subtracting the result from the reference brewing height (hpi 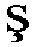 ) (hson=hpi 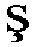 -Δ1*K1).

3. A coffee machine (1) as in Claim 1 or 2, **characterized by** the control unit (7) that, if the height measurement value (hölç) taken by means of the sensor (6) a certain time (t) after the start of the brewing process is higher (hölç>href) than a predetermined reference value (href), calculates the brewing height (hson) by multiplying the difference (Δ1) between the measured value (hölç) and the reference value (href) by a second coefficient (K2) that is smaller than 1 and then adding the result to the reference brewing height (hpi 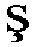 ) (hson=hpi 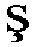 +Δ1*K2).

4. A coffee machine (1) as in any one of the above claims, **characterized by** the control unit (7) that ends the brewing process at the reference brewing height (hpi 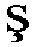 ) if the measured value (hölç) is equal to the reference value (href).

5. A coffee machine (1) as in Claim 2 and 3, **characterized by** the control unit (7) into the memory of which the first coefficient (K1) is saved as being higher than the second coefficient (K2) (K1>K2).

6. A coffee machine (1) as in Claim 5 or Claim 2 and 3, **characterized by** the control unit (7) in the memory of which a different first coefficient (K1) and second coefficient (K2) are saved for different types of coffee.

7. A Turkish coffee brewing method executed by the control unit (7) of a coffee machine according to one of the above claims and comprising the steps of
- measuring the level of the coffee-water mixture in the brewing pot (4) a predetermined time (t) after the brewing process starts and saving the measured value (hölç) into the memory of the control unit (7),
- comparing the measured value (hölç) with a predetermined reference value (href),
- selecting the first coefficient (K1) for calculating the brewing height (hson) whereat the brewing process is ended if the measured value (hölç) is smaller than the reference height value (href) (hölç < href) and selecting the second coefficient (K2) for calculating the brewing height (hson) if the measured value (hölç) is higher than the reference height value (href) (hölç > href),
- calculating the brewing height (hson) by using a predetermined reference brewing height (hpi 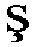 ), the reference height (href), the measured value (hölç) and the first coefficient (K1) or the second coefficient (K2),
- ending the brewing process when the value measured by the level sensor (6) during the brewing process is equal to the calculated brewing height (hson).

## Patentansprüche

1. Eine Kaffeemaschine (1) umfasst einen Körper (2); mindestens eine Braukammer (3), die im Körper (2) angeordnet ist; mindestens einen Brühbehälter (4), der in die Brühkammer (3) gestellt wird und in dem Wasser, Kaffee und nach Belieben zusätzliche Zutaten wie Zucker eingelegt und gebrüht werden; einen Heizer (5), der unter der Brühkammer (3) angeordnet ist und das Erhitzen des Brühbehälters (4) ermöglicht; einen Füllstandsensor (6), der an der Decke der Brühkammer (3) angeordnet ist, zum Brühbehälter (4) zeigt und den Füllstand (L) der Wasser-Kaffee-Mischung im Brühbehälter (4) misst, und eine Steuereinheit (7), die den Heizer (5) gemäß den vom Füllstandsensor (6) empfangenen Daten steuert und eine Brühhöhe (hson) berechnet, bei der der Brühvorgang beendet wird; **gekennzeichnet ist sie durch** die Steuereinheit (7), die die Brühhöhe (hson) so berechnet, dass zwischen der Brühhöhe (hson) und einer vorgegebenen Referenzbrühhöhe (hpi 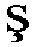 ) eine Differenz (Δ2) besteht, die kleiner als die Differenz ist (Δ1), der sich von Null unterscheidet, der zwischen dem mit dem Sensor (6) gemessenen Höhenmesswert (hölç) eine bestimmte Zeit (t) nach Beginn des Brühvorgangs und einem vorgegebenen Referenzwert (href) für zur gleichen Zeit (t) liegt.

2. Eine Kaffeemaschine (1), wie in Anspruch 1 aufgeführt, **ist dadurch gekennzeichnet, dass** die Steuereinheit (7), die, wenn der mit dem Sensor (6) über den Sensor (6) gemessene Höhenmesswert (hölç) eine bestimmte Zeit (t) nach Beginn des Brauprozesses kleiner (hölç <href) als ein vorgegebener Referenzwert ist (href) berechnet die Brühhöhe (hson), indem die Differenz (Δ1) zwischen dem gemessenen Wert (hölç) und dem Referenzwert (href) mit einem ersten Koeffizienten (K1) multipliziert wird, der kleiner als 1 ist, und dann das Ergebnis von der Referenzbrühhöhe subtrahiert wird (hpi 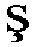 ) (hson=hpi 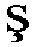 -Δ1*K1).

3. Eine Kaffeemaschine (1), wie in den Ansprüchen 1 oder 2 aufgeführt, **ist dadurch gekennzeichnet, dass** die Steuereinheit (7), die, wenn der mit Hilfe des Sensors (6) über den Sensor (6) gemessene Höhenmesswert (hölç) eine bestimmte Zeit (t) nach Beginn des Brauprozesses höher ist (hölç> href) als ein vorgegebener Referenzwert (href) die Brühhöhe (hson) berechnet, indem die Differenz (Δ1) zwischen dem gemessenen Wert (hölç) und dem Referenzwert (href) mit einem zweiten Koeffizienten (K2) multipliziert wird, der kleiner als 1 ist, und dann das Ergebnis auf die Referenzbrühhöhe addiert (hpi 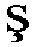 ) (hpi 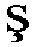 ) (hson=hpi 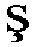 +Δ1*K2).

4. Eine Kaffeemaschine (1), wie in einem der vorherigen Ansprüchen aufgeführt, **ist dadurch gekennzeichnet, dass** die Steuereinheit (7) den Brühvorgang auf der Referenzbrühhöhe (hpi 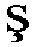 ) beendet, wenn der gemessene Wert (hölç) gleich dem Referenzwert ist (hpç) href).

5. Eine Kaffeemaschine (1), wie in den Ansprüchen 2 und 3 aufgeführt, **ist dadurch gekennzeichnet, dass** die Steuereinheit (7) einen Speicher aufweist, indessen der erste Koeffizient (K1) als höher als der zweite Koeffizient (K2) gespeichert ist (K1> K2).

6. Eine Kaffeemaschine (1), wie in den Ansprüchen 2, 3 oder 5 aufgeführt, **ist dadurch gekennzeichnet, dass** die Steuereinheit (7) einen Speicher aufweist, in der eine unterschiedliche erste Koeffizient (K1) und zweite Koeffizient (K2) für unterschiedliche Kaffeesorten gespeichert sind.

7. Ein Brühverfahren für das türkische Kaffee, das von der Steuereinheit (7) einer Kaffeemaschine gemäß einem der vorher aufgeführten Ansprüche ausgeführt wird, umfasst die Schritte
- Messen des Füllstands der Kaffee-Wasser-Mischung in dem Brühbehälter (4) eine vorbestimmte Zeit (t) nach Beginn des Brühvorgangs und Speichern des Messwerts (hölç) im Speicher der Steuereinheit (7);
- Vergleichen des Messwertes (hölç) mit einem vorgegebenen Referenzwert (href),
- Auswahl des ersten Koeffizienten (K1) zur Berechnung der Brühhöhe (hson), wobei der Brühvorgang beendet wird, wenn der gemessene Wert (hölç) kleiner als der Referenzhöhenwert (href) (hölç <href) ist, und Auswahl des zweiten Koeffizienten (K2)) zur Berechnung der Brühhöhe (hson), wenn der gemessene Wert (hölç) höher ist als der Referenzhöhenwert (href) (hölç> href),
- Berechnung der Brühhöhe (hson) unter Verwendung einer vorgegebenen Referenzbrühhöhe (hpi 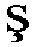 ), der Referenzhöhe (href), des gemessenen Wertes (hölç) und des ersten Koeffizienten (K1) oder des zweiten Koeffizienten (K2);
- Beenden des Brühvorgangs, wenn der vom Füllstandsensor (6) während des Brühvorgangs gemessene Wert der berechneten Brühhöhe (hson) entspricht.

## Revendications

1. Une machine à café (1) **comprenant** un corps (2) ; au moins une chambre de percolation (3) qui est disposée dans le corps (2) ; au moins un récipient d'infusion (4) qui est placé dans la chambre de percolation (3) et dans lequel de l'eau, du café et, selon la préférence, des ingrédients supplémentaires tels que du sucre sont mis et infusés ; un dispositif de chauffage (5) qui est disposé sous la chambre de percolation (3) et qui permet de chauffer le récipient d'infusion (4) ; un capteur de niveau (6) disposé au sommet de la chambre de percolation (3), qui est orienté vers le récipient d'infusion (4) et qui mesure le niveau (L) du mélange eau-café dans le récipient d'infusion (4), et une unité de commande (7) qui commande le chauffage (5) en fonction des données reçues du capteur de niveau (6) et qui calcule une hauteur d'infusion (hson) à laquelle le processus d'infusion est terminé, **est caractérisé en ce que** l'unité de commande (7) calcule la hauteur de brassage (hson) de telle sorte qu'il existe une différence (Δ2) entre la hauteur de brassage (hson) et une hauteur de brassage de référence prédéterminée (hpi 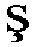 ), qui est inférieure à la différence (Δ1), qui est différente de zéro, entre la valeur de mesure de la hauteur (hölç) prise au moyen du capteur (6) un certain temps (t) après le début du processus de brassage et une valeur de référence prédéterminée (href) pour le même temps (t).

2. Une machine à café (2) comme dans la déclaration 1, **est caractérisée par,** l'unité de commande (7) qui, si la valeur de mesure de la hauteur (hölç) prise au moyen du capteur (6) un certain temps (t) après le début du processus d'infusion est inférieure (hölç<href) à une valeur de référence prédéterminée (href), calcule la hauteur de brassage (hson) en multipliant la différence (Δ1) entre la valeur mesurée (hölç) et la valeur de référence (href) par un premier coefficient (K1) qui est inférieur à 1, puis en soustrayant le résultat de la hauteur de brassage de référence hpi 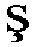 ) (hson=hpi 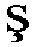 -Δ1*K1).

3. Une machine à café (1) comme dans la déclaration 1 ou 2, **est caractérisée par** l'unité de commande (7) qui, si la valeur de mesure de la hauteur (hölç) prise au moyen du capteur (6) un certain temps (t) après le début du processus d'infusion est supérieure (hölç>href) à une valeur de référence prédéterminée (href), calcule la hauteur de brassage (hson) en multipliant la différence (Δ1) entre la valeur mesurée (hölç) et la valeur de référence (href) par un deuxième coefficient (K2) inférieur à 1, puis en ajoutant le résultat à la hauteur de brassage de référence (hpi 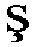 ) (hpi 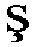 ) (hson=hpi 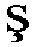 +Δ1*K2).

4. Une machine à café (1) comme dans chacune des déclarations ci-dessus, **est caractérisée en ce que** l'unité de commande (7) termine le processus d'infusion à la hauteur d'infusion de référence (hpi 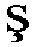 ) si la valeur mesurée (hölç) est égale à la valeur de référence (href).

5. Une machine à café (1) comme dans les déclarations 2 et 3, **est caractérisée en ce que** l'unité de commande (7) dans la mémoire de laquelle le premier coefficient (K1) est enregistré comme étant supérieur au second coefficient (K2) (K1>K2).

6. Une machine à café (1) comme dans la déclaration 5 ou les déclarations 2 et 3, **est caractérisée en ce que** l'unité de commande (7) dans la mémoire de laquelle un premier coefficient (K1) et un deuxième coefficient (K2) différents sont enregistrés pour différents types de café.

7. Une méthode de préparation du café turc exécutée par l'unité de commande (7) d'une machine à café selon l'une des déclarations ci-dessus et comprenant les étapes suivantes
- mesurer le niveau du mélange café-eau dans la cafetière (4) un temps prédéterminé (t) après le début du processus d'infusion et enregistrer la valeur mesurée (hölç) dans la mémoire de l'unité de commande (7),
- comparer la valeur mesurée (hölç) avec une valeur de référence prédéterminée (href),
- sélectionner le premier coefficient (K1) pour le calcul de la hauteur de brassage (hson) à la fin du processus de brassage si la valeur mesurée (hölç) est inférieure à la valeur de la hauteur de référence (href) (hölç < href) et sélectionner le deuxième coefficient (K2) pour le calcul de la hauteur de brassage (hson) si la valeur mesurée (hölç) est supérieure à la valeur de la hauteur de référence (href) (hölç > href),
- calculer la hauteur de brassage (hson) en utilisant une hauteur de brassage de référence prédéterminée (hpi 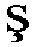 ), la hauteur de référence (href), la valeur mesurée (hölç) et le premier coefficient (K1) ou le deuxième coefficient (K2),
- terminer le processus de brassage lorsque la valeur mesurée par le capteur de niveau (6) pendant le processus de brassage est égale à la hauteur de brassage calculée (hson).
